# EUROPEAN PATENT APPLICATION

(11) **EP 4 697 414 A1**
(43) Date of publication of application: **18.02.2026**
(21) Application number: 25195828.6
(22) Date of filing: 14.08.2025
(51) Int. Cl.: H01M 4/62, H01M 4/58, H01M 10/36

(54) **CATHODE ELECTRODE OF ZINC-BROMINE STATIC BATTERY APPARATUS AND METHOD OF PREPARATION THEREOF**

(30) Priority: 16.08.2024 IN 202411062094
(71) Applicant: Offgrid Energy Labs Inc., San Francisco California 94111 (US)
(72) Inventor: Tulachan, Brindan, 208016 Kanpur (IN); Subramanian, Suresh, 626132 Watrap (IN)
(74) Representative: Nirwan, Prajwal

(57) **Abstract**

A cathode electrode for a Zinc Bromine Static Battery (ZBSB) apparatus (100) is disclosed. The cathode electrode includes 85-90 % by weight of a mixture of a quaternary ammonium salt fused with super P carbon to form a salt-fused super P carbon component. The cathode electrode further includes 5-12 % by weight of the super P carbon and 1-5 % by weight of a binder. The salt-fused super P carbon component, the super P carbon, and the binder are mixed together to form the cathode electrode.

## Description

### TECHNICAL FIELD

The present disclosure relates generally to battery technology and, more specifically, to a Zinc Bromine Static Battery (ZBSB) apparatus, and a cathode electrode of the ZBSB apparatus. Moreover, the present disclosure further relates to a method of preparation of the cathode electrode of the ZBSB apparatus using a partially dry electrode process and a method of preparation of the cathode electrode using a completely dry electrode process.

### BACKGROUND

Among various battery technologies, zinc-bromine static batteries (ZBSBs) have emerged as promising candidates for different ranges of energy storage due to their high energy density and long cycle life. However, a significant challenge faced by conventional ZBSBs designs is the diffusion of element bromine from the cathode electrode into the electrolyte solution during the charging process.

During a charging cycle of the ZBSB, the element bromine is liberated at a surface of the cathode electrode. When the element bromine diffuses into an electrolyte solution, the performance and longevity of the ZBSB can be affected detrimentally. The diffused element bromine may initiate unwanted side reactions, leading to decreased battery efficiency and increased overall cell voltage. Moreover, crossover of the element bromine may contribute to corrosion, compromising the overall stability and cycle life of the ZBSB. The crossover refers specifically to the movement of the element bromine from a cathode side to an anode side through the electrolyte. Migration of the element bromine, particularly during the charging process, can have significant implications for the battery's performance, including increasing the over-cell voltage and decreasing overall efficiency. The element bromine may trigger chemical reactions on the anode side, causing voltage spikes beyond desired levels.

Further, the crossover of the element bromine may disrupt electrochemical processes inside the ZBSB, reducing energy conversion efficiency and overall battery performance. Additionally, bromine contamination of the electrolyte may interfere with stable reactions, further decreasing efficiency and compromising long-term reliability.

Continuous crossover also leads to capacity loss over time, diminishing the battery's ability to store and deliver energy effectively. Certain efforts have been made to address the challenge of the element bromine diffusion, such as modifying cathode electrode materials, optimizing the electrolyte compositions, or implementing barrier layers. However, the efforts have provided limited success and have not offered a comprehensive solution.

Therefore, in the light of the foregoing discussion, there exists a need to overcome the aforementioned drawbacks.

### SUMMARY

The present disclosure provides a cathode electrode of (for use in) a Zinc Bromine Static Battery (ZBSB) apparatus and a method of preparation of the cathode electrode of (for use in) the ZBSB apparatus. The present disclosure provides a solution to the technical problem of how to enhance corrosion resistance and overall performance of the cathode electrode of the ZBSB apparatus, particularly addressing issues related to the diffusion of element bromine liberated at a surface of the cathode electrode. An aim of the present disclosure is to provide a solution that overcomes at least partially the problems encountered in the prior art and provide an improved cathode electrode of (for use in) the ZBSB apparatus that effectively mitigates corrosion during charge and discharge cycles, seizes the diffusion of the element bromine to the electrolyte, and enhances the overall efficiency and longevity of the ZBSB apparatus. The present disclosure further aims to provide an improved ZBSB apparatus with enhanced performance. Moreover, the present disclosure aims to provide an improved method of preparation of the cathode electrode of the ZBSB apparatus using a partially dry electrode process and another method of preparation of the cathode electrode of the ZBSB apparatus using a completely dry electrode process.

One or more objectives of the present disclosure are achieved by the solutions provided in the enclosed independent claims. Advantageous implementations of the present disclosure are further defined in the dependent claims.

In one aspect, the present disclosure provides the cathode electrode of the ZBSB apparatus. The cathode electrode includes 85-90 % by weight of a mixture of a quaternary ammonium salt fused with super P carbon (SPC) to form a salt-fused SPC component. The cathode electrode further includes 5-12 % by weight of the SPC and 1-5 % by weight of a binder. The salt-fused SPC component, the SPC, and the binder are mixed together to form the cathode electrode.

The quaternary ammonium salts are compounds with positively charged nitrogen atoms bonded to four organic groups and a halide ion. The fusion of the quaternary ammonium salt with the SPC creates a material that leverages the strengths of both the substances (i.e., the quaternary ammonium salt and the SPC). The conductive properties of the SPC are enhanced by the ionic properties of the quaternary ammonium salt, leading to improved overall performance. Specifically, the quaternary ammonium salts are known for their ionic conductivity and when fused with the SPC, the quaternary ammonium salts facilitate more efficient ion transport, reducing resistance and improving the charge/discharge rates of the ZBSB apparatus. The SPC has a high specific surface area, which increases the active sites for electrochemical reactions. The electrochemical reaction is further enhanced by the quaternary ammonium salt, leading to better interaction with the electrolyte and improved battery performance. The fusion process creates a stable composite material that is resistant to degradation. The stability ensures that the cathode electrode maintains its performance over a longer lifespan, providing reliable energy storage. The mixing process ensures a homogeneous distribution of the salt-fused SPC component, the SPC, and the binder. The uniformity prevents hotspots and ensures consistent electrical and ionic properties throughout the cathode electrode. The binder provides mechanical strength and flexibility to the cathode electrode, preventing cracks or breaks under operational stresses, which maintains the structural integrity of the cathode electrode during battery operation. The combination of the salt-fused SPC component, the SPC, and the binder results in high energy efficiency by reducing internal resistance and energy losses, which ensures that a more significant proportion of stored energy is usable, enhancing the overall efficiency of the ZBSB apparatus.

In an implementation, the salt-fused SPC component comprises 50-55 % by weight of the quaternary ammonium salt and 40-45 % by weight of the SPC. Beneficially, by varying the weight percentages of the quaternary ammonium salt and the SPC within the salt-fused SPC component, the properties of the salt-fused SPC component may be tailored to specific requirements. The flexibility allows for the optimization of key characteristics such as porosity, surface area, and ion exchange capacity, which are essential for achieving improved battery performance metrics of the ZBSB apparatus. Further, the presence of the quaternary ammonium salt within the SPC matrix promotes improved electrochemical activity by providing additional active sites for redox reactions. The additional active site for redox reactions enhances the charge storage capacity and ion diffusion kinetics of the cathode electrode, leading to higher energy density and better overall performance of the ZBSB apparatus.

In an implementation, the quaternary ammonium salt is tetra butyl ammonium bromide (TBAB). In such embodiment, the TBAB enhances the ionic conductivity within the cathode electrode, facilitating efficient ion transport during the charge and discharge cycles of the ZBSB apparatus. The TBAB is chemically stable in electrochemical systems, ensuring consistent performance and longevity of the cathode electrode. The TBAB improves the ion exchange process, reduces internal resistance, and increases charge/discharge efficiency. When combined with the SPC, the TBAB forms a stable and robust composite material. The even distribution of the TBAB within the SPC prevents hotspots and ensures uniform electrical and ionic properties throughout the cathode electrode. The combination promotes better electrochemical reactions, higher energy efficiency, and increased energy density, contributing to the improved performance of the ZBSB apparatus.

In an implementation, the binder comprises polytetrafluoroethylene (PTFE) or polyvinylidene fluoride (PVDF). The purpose of adding the binder is to enhance the cohesion and adhesion of the SPC in the cathode electrode. The binder acts as a binding agent, ensuring the structural integrity of the cathode electrode and preventing the carbon particles of the SPC from separating or dislodging during the operation of the ZBSB apparatus. The PTFE and the PVDF have excellent chemical resistance, high thermal stability, and strong adhesion properties.

In the second aspect, the present disclosure provides a ZBSB apparatus. The ZBSB apparatus includes a first cell that comprises a first cathode electrode. The first cathode electrode is in contact with a first cathode current collector. Further, the ZBSB apparatus comprises a second cell that comprises a second cathode electrode. The second cathode electrode is in contact with a second cathode current collector. Furthermore, each of the first cathode electrode and the second cathode electrode includes 85-90 % by weight of a mixture of a quaternary ammonium salt fused with SPC to form a salt-fused SPC component; 5-12 % by weight of the SPC and 1-5 % by weight of a binder. The salt-fused SPC component, the SPC, and the binder are mixed to form the cathode electrode.

In the third aspect, the present disclosure provides a method of preparing a cathode electrode of a ZBSB apparatus using a partially dry electrode process. The method includes drying SPC and the quaternary ammonium salt to remove moisture. Further, the method includes preparing an aqueous solution by dispersing 40-45 % by weight of the quaternary ammonium salt and 50-55 % by weight of the SPC in water and heating the aqueous solution to obtain a salt-fused SPC component. The method further includes mixing 85-90 % by weight of the salt-fused SPC component with 5-12 % by weight of the SPC and 1-5 % by weight of a binder to form a cathode electrode mixture and forming the cathode electrode mixture into a sheet to obtain the cathode electrode.

In the fourth aspect, the present disclosure provides a method of preparing a cathode electrode of a ZBSB apparatus using a completely dry electrode process. The method includes drying the SPC and a quaternary ammonium salt to remove moisture. The method further includes mixing 40-45 % by weight of the quaternary ammonium salt and 50-55 % by weight of the SPC to form a salt-fused SPC component. A mixture of the quaternary ammonium salt and the SPC is devoid of any liquid solvent. The method further includes mixing 85-90 % by weight of the salt-fused SPC component with 5-12 % by weight of the SPC and 1-5 % by weight of a binder to form a cathode electrode mixture and forming the cathode electrode mixture into a sheet to obtain the cathode electrode.

The methods of the third aspect and the fourth aspect achieve all the advantages and technical effects of the cathode electrode of the ZBSB apparatus of the present disclosure. It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features, and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1A is a diagram illustrating an exploded view of a cell of a zinc-bromine static battery (ZBSB) apparatus, in accordance with an embodiment of the present disclosure;
FIG. 1B is a diagram illustrating a cross-sectional view of the ZSBS apparatus, in accordance with an embodiment of the present disclosure;
FIG. 1C is a diagram illustrating a top view of the ZBSB apparatus, in accordance with an embodiment of the present disclosure;
FIG. 2 is a diagram illustrating a cross-sectional view of a cell of another ZBSB apparatus, in accordance with another embodiment of the present disclosure;
FIG. 3 is a diagram illustrating a cross-sectional view of a cell of yet another ZBSB apparatus, in accordance with another embodiment of the present disclosure;
FIG. 4 is a flowchart of a method of preparation of the cathode electrode using a partially dry electrode process, in accordance with an embodiment of the present disclosure;
FIG. 5 is a flowchart of a method of preparation of the cathode electrode using a completely dry electrode process, in accordance with an embodiment of the present disclosure; and
FIG. 6 is a diagram illustrating a graphical representation of a GCD profile depicting the comparison between a partially dry electrode process and a completely dry electrode process, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

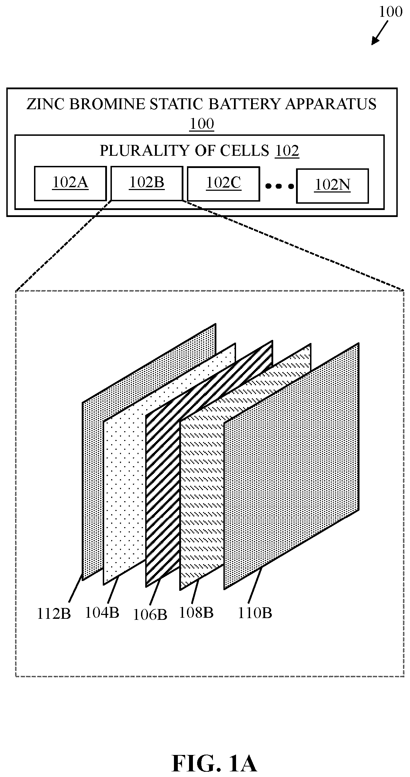

FIG. 1A is a diagram illustrating an exploded view of a cell of a zinc bromine static battery (ZBSB) apparatus, in accordance with an embodiment of the present disclosure. With reference to FIG. 1A, there is shown a ZBSB apparatus **100.** The ZBSB apparatus **100** includes a plurality of cells **102.** The plurality of cells **102** includes a first cell **102A,** a second cell **102B,** a third cell **102C,** and so on, up to an Nth cell **102N.** In the illustrated embodiment of FIG. 1A, the second cell **102B** includes a second anode electrode **104B,** a second cathode electrode **108B,** and a second separator **106B** disposed between the second anode electrode **104B** and the second cathode electrode **108B.** Further, the second anode electrode **104B** is in contact with a second anode current collector **112B** and a second cathode electrode **108B** is in contact with the second cathode current collector **110B.**

It should be noted that, for illustration purposes, only the second cell **102B** is explicitly shown in FIG. 1A. However, each cell in the ZBSB apparatus **100** is structurally similar, sharing common features and functionalities. The omitted cells (e.g., **102A, 102C** to **102N)** adhere to the same design principles and components, differing only in their sequential arrangement within the battery stack. Components for cells, i.e., the first cell **102A,** the third cell **102C,** to the Nth cell **102N,** are not explicitly shown in FIG. 1A for clarity, but follow the same numbering convention.

The ZBSB apparatus **100** refers to a type of rechargeable battery that uses zinc and bromine as its active materials in which the static property comes from the fact that the ZBSB apparatus **100** may not require any pumps or moving parts to circulate an electrolyte, unlike a flow battery. Further, the ZBSB apparatus **100** involves a redox reaction between zinc and bromine ions. During discharge, zinc is oxidized at the anode, releasing electrons, while bromine is reduced at the cathode, accepting electrons. During charging, this process is reversed.

The plurality of cells **102** in the ZBSB apparatus **100** refers to the multiple individual electrochemical cells that are connected together to form the overall battery. The plurality of cells **102** are arranged in a stack within the ZBSB apparatus **100.**

Each cell of the plurality of cells **102** (for example, the first cell **102A,** the second cell **102B,** and so on up to the Nth cell **102N)** refers to an individual electrochemical unit within the ZBSB apparatus 100 where the conversion of chemical energy to electrical energy takes place (i.e. through redox reactions). Each cell consists of an anode electrode (for example, the second anode electrode **104B)** and a cathode electrode (for example, the second cathode electrode **108B)** immersed in an electrolyte solution containing zinc and bromine compounds. Further, each cell includes a separator (for example, the second separator **106B)** between the anode electrode (for example, the second anode electrode **104B)** and the cathode electrode (for example, the second cathode electrode **108B).** Furthermore, each cell includes an anode current collector and a cathode current collector (for example, the second anode current collector **112B** and the second cathode current collector **110B).**

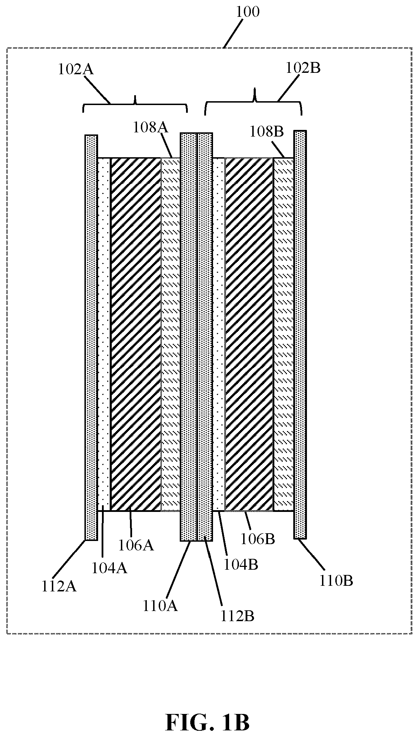

FIG. 1B is a diagram illustrating a cross-sectional view of the ZBSB apparatus, in accordance with an embodiment of the present disclosure. FIG. 1B is explained in conjunction with elements from FIG. 1A. With reference to FIG. 1B, there is shown the ZBSB apparatus **100** which includes the first cell **102A** and the second cell **102B** of the plurality of cells **102** for illustration purposes. The first cell **102A** includes a first anode electrode **104A,** a first cathode electrode **108A** and a first separator **106A** disposed between the first anode electrode **104A** and the first cathode electrode **108A.** The first cell **102A** further includes a first cathode current collector 110A and a first anode current collector **112A.** The first anode electrode **104A** is in contact with the first anode current collector **112A,** and the first cathode electrode **108A** is in contact with the first cathode current collector **110A.** As discussed above, the second cell **102B** includes the second anode electrode **104B,** the second separator **106B,** and the second cathode electrode **108B.**

The anode electrode (for example, the first anode electrode **104A** and the second anode electrode **104B)** in the ZBSB apparatus **100** refers to an electrode where oxidation takes place during the discharge phase of an electrochemical cell. Specifically, in the case of the ZBSB apparatus **100,** zinc (Zn) is used as an anode material, the anode electrode is the region or component where metallic zinc undergoes oxidation. In the case of the first anode electrode **104A,** during a charging process, zinc ions in the electrolyte flow to the first anode electrode 104A and are deposited at the first anode electrode **104A** in a solid state (i.e., Zn is plated at the first anode electrode **104A).** Further, two electrons are released from the first cathode electrode **108A,** travel through the external circuit, and are accepted by the zinc ions at the first anode electrode **104A.** The acceptance of the electrons by the zinc ions at the first anode electrode **104A** is known as a zinc plating process. During a discharging process, zinc plated at the first anode electrode **104A** releases two electrons that form zinc ions. The zinc ions are then dissolved in the electrolyte. Simultaneously, the released electrons are accepted by the element bromine of the first cathode electrode **108A** to form mobile bromide ions, which in turn also dissolve in the electrolyte. In the case of the second anode electrode **104B,** during the charging process, the Zn ions in the electrolyte flow to the second anode electrode **104B** and are deposited at the second anode electrode **104B** in a solid state (i.e., the metallic zinc is plated at the second anode electrode **104B).** Yet again, during the Zn plating process, two electrons released from the second cathode electrode **108B** travel through the external circuit and are accepted by the zinc ions at the second anode electrode **104B.** During the discharging process, the zinc plated at the second anode electrode **104B** releases two electrons that form the zinc ions. The zinc ions then dissolve in the electrolyte. Further, the released electrons are accepted by the element bromine of the second cathode electrode **108B** to form the mobile bromide ions, which in turn also dissolve in the electrolyte.

The cathode electrode (for example, the first cathode electrode **108A** and the second cathode electrode **108B)** refers to the electrode where reduction reactions occur during the discharge phase of the electrochemical cell. Specifically, in the case of the ZBSB apparatus **100,** the cathode electrode is a component where bromine molecules are reduced. In the case of the first cathode electrode **108A,** during the charging process, the bromide ions from the electrolyte are oxidized and form the element bromine that is generated on the first cathode electrode **108A.** During the formation of the element bromine in the charging process, two electrons are released at the first cathode electrode **108A,** where the two electrons travel through the external circuit and are accepted by the zinc ions at the first anode electrode **104A,** and where the zinc ions after accepting the two electrons get plated at the first anode electrode **104A** of the first cell **102A.** During the discharge process, the element bromine generated on the first cathode electrode **108A** accepts two electrons (received from the first anode electrode **104A** via the external circuit) and the element bromine is reduced, which forms the bromide ions. The bromide ions are then dissolved in the electrolyte. In the case of the second cathode electrode **108B,** during the charging process, the bromide ions from the electrolyte are oxidized and form the element bromine that is generated on the second cathode electrode **108B.** During the formation of the bromide ion in the charging process, the two electrons are released at the second cathode electrode **108B,** where the two electrons travel through the external circuit and are accepted by the zinc ions at the second anode electrode **104B,** and where the zinc ions after accepting the two electrons get plated at the second anode electrode **104B** of the first cell **102A.** During the discharge process, the element bromine generated on the first cathode electrode **108A** accepts two electrons (received from the first anode electrode **104A** via the external circuit) and the element bromine is reduced, forming bromide ions. The bromide ions are then dissolved in the electrolyte.

In an implementation, the cathode electrode (for example, the first cathode electrode **108A** and the second cathode electrode **108B)** of the ZBSB apparatus **100** includes 85-90 percentage (%) by weight of a mixture of a quaternary ammonium salt fused with super P carbon (SPC) to form a salt-fused SPC component. The "quaternary ammonium salt" refers to a type of an organic compound that contains a positively charged nitrogen atom and four organic groups attached to it. The SPC is a high-purity conductive carbon black characterized by a fine particle size of 40-50 nanometers (nm) and a larger specific surface area (SSA) exceeding 60 square meter per gram (m²/g). The SPC is primarily composed of mesopores and micropores, which contribute to provide the larger SSA. The SSA is a property of materials that measures the total surface area of a material per unit of mass. The high SSA provides a more significant number of contact points between individual carbon particles, which facilitates the formation of an extensive and interconnected conductive network within the material. More contact points mean that electrons have multiple pathways to travel through, reducing the overall resistance and enhancing the conductivity. The fine particle size and larger SSA allow for better dispersion of the SPC particles within the cathode electrode material. The uniform distribution helps in achieving consistent conductivity throughout the cathode electrode. Further, the larger SSA provides a larger active surface area for electrochemical reactions to occur. This is particularly important in battery applications, for example, the ZBSB apparatus **100,** where efficient charge transfer at the electrode-electrolyte interface is crucial.

The salt-fused SPC component refers to the SPC material that has been impregnated or infused with the quaternary ammonium salt, resulting in improved conductivity and electrochemical performance. The quaternary ammonium salts are compatible with electrolyte solutions commonly used in the ZBSBs apparatus **100.** The compatibility ensures that the salt-fused SPC component does not adversely interact with or degrade the electrolyte. The presence of quaternary ammonium cations in the salt-fused SPC facilitates ion transport and improves the ionic conductivity within the cathode electrode, leading to more efficient electrochemical reactions.

In some implementations, the salt-fused SPC component comprises 50-55 % by weight of the quaternary ammonium salt and 40-45 % by weight of the SPC. Beneficially, by varying the weight percentages of the quaternary ammonium salt and the SPC within the salt-fused SPC component, the properties of the salt-fused SPC component may be tailored to specific requirements. The flexibility allows for the optimization of key characteristics such as porosity, surface area, and ion exchange capacity, which are essential for achieving improved battery performance metrics of the ZBSB apparatus **100.** Further, the presence of the quaternary ammonium salt within the SPC promotes improved electrochemical activity by providing additional active sites for redox reactions. The additional active site for redox reactions enhances the charge storage capacity and ion diffusion kinetics of the cathode electrode, leading to higher energy density and better overall performance of the ZBSB apparatus **100.**

In an implementation, the quaternary ammonium salt is tetrabutylammonium bromide (TBAB). The TBAB enhances the ionic conductivity within the cathode electrode, facilitating efficient ion transport during charge and discharge cycles. The TBAB is chemically stable in electrochemical systems, ensuring consistent performance and longevity of the electrode material. The TBAB improves the ion exchange process, reduces internal resistance, and increases charge/discharge efficiency. When combined with the SPC, the TBAB forms a stable and robust composite material. Even distribution of the TBAB within the SPC prevents hotspots and ensures uniform electrical and ionic properties throughout the cathode electrode. The combination promotes better electrochemical reactions, higher energy efficiency, and increased energy density, contributing to the improved performance of the ZBSB apparatus **100** and ultimately improving the efficiency of the ZBSB apparatus **100.**

In an implementation, the cathode electrode (for example, the first cathode electrode **108A** and the second cathode electrode **108B)** further includes 5-12 % by weight of the SPC. The addition of the SPC in discrete form in the cathode electrode is essential to enhance the performance of the ZBSB apparatus **100.** The SPC improves the electrical conductivity and stability of the cathode electrode, leading to improved battery efficiency and longevity.

After formation of the salt fused SPC component, the SPC is further added in discrete form.to the salt-fused SPC component. The SPC present in the salt fused SPC component creates a continuous and uniform conductive network, improving electron flow throughout the cathode electrode whereas the SPC in the discrete form further contributes to the overall conductivity by filling in gaps and enhancing local conductive pathways. Further, the SPC present in the salt fused SPC component ensures a strong, cohesive matrix, providing mechanical integrity and reducing the likelihood of structural failure. The SPC in discrete form may be tailored to optimize specific electrochemical properties, such as ion conductivity, without compromising the overall stability. The combined approach allows for fine-tuning of properties of the cathode electrode by adjusting the proportion and distribution of both SPC present in salt fused SPC component and the SPC present in discrete form.

In an implementation, the cathode electrode (for example, the first cathode electrode **108A** and the second cathode electrode **108B)** further includes 1-5 % by weight of a binder. The salt-fused SPC component, the SPC, and the binder are mixed together to form the cathode electrode. The binder refers to a substance that is used to hold together the active materials and other components in the ZBSB apparatus **100,** providing cohesion and structural integrity to the cathode electrode. The purpose of adding the binder is to enhance the cohesion and adhesion of the SPC particles in the cathode electrode. The binder acts as a binding agent, ensuring the structural integrity of the cathode electrode and preventing the carbon particles from separating or dislodging during the operation of the ZBSB apparatus **100.**

In an implementation, the binder comprises polytetrafluoroethylene (PTFE) or polyvinylidene fluoride (PVDF). The PTFE and the PVDF exhibit excellent chemical resistance, high thermal stability, and strong adhesion properties. When the PTFE or the PVDF as implemented as binders in the cathode electrode, the performance of the ZBSB apparatus **100** improves significantly. The PTFE and PVDF facilitate maintaining the structural integrity of the cathode electrode, enhancing its mechanical strength, and providing better electrical conductivity.

The separator (for example, the first separator **106A** and the second separator **106B)** refers to a component that physically and electrically separates the anode electrode and the cathode electrode within a cell. The primary purpose of the separator is to prevent direct contact between the positive and negative electrodes while allowing the flow of ions between them. In an example, the first separator **106A** separates the first anode electrode **104A** and the first cathode electrode **108A.** The first separator 106A has submicron-sized pores, and the pores work as channels where ions move between the first anode electrode **104A** and the first cathode electrode **108A.** Examples of the implementation of the first separator **106A** may include, but are not limited to, an absorption glass mat (AGM), a polyethylene (PE) or a sulfonated tetrafluoroethylene-based fluoropolymer-copolymer. In another example, the second separator **106B** separates the second anode electrode **104B** and the second cathode electrode **108B.** The second separator **106B** has submicron-sized pores, and the pores work as channels where ions move between the second anode electrode **104B** and the second cathode electrode **108B.** Examples of the implementation of the second separator **106B** may include, but are not limited to, an absorption glass metal (AGM), a polyethylene (PE) or a sulfonated tetrafluoroethylene based fluoropolymer-copolymer.

The current collector (for example, the first anode current collector **112A,** the first cathode current collector **110A,** the second anode current collector **112B,** and the second cathode current collector **110B)** refers to a specialized structure used in certain types of batteries, including the ZBSB apparatus **100.** The current collector in the ZBSB apparatus **100** acts as a conductive pathway for the flow of electrons between the electrochemical reactions (i.e., redox reactions) occurring in the cathode electrode and the anode electrode of the ZBSB apparatus **100** and an external circuit. The current collector facilitates the transfer of electrical charges generated during the chemical reactions within the ZBSB apparatus **100.**

In some implementations, each of the first cathode electrode **108A** and the second cathode electrode **108B** is in physical contact with the current collector comprising any one of titanium metal, a conductive high-density polyethylene (HDPE) sheet, and a bilayer of graphite conducting polymer and HDPE conducting sheet. The physical contact between the cathode electrode and the current collector stabilizes the cathode electrode during charge and discharge cycles, preventing detachment and ensuring longevity. The physical contact promotes uniform current distribution, preventing high current density areas that may degrade the cathode electrode. Additionally, physical contact minimizes resistance at the cathode electrode-electrolyte interface, facilitating efficient charge transfer. Further, the option to use different materials for the current collector provides flexibility in designing batteries for specific applications. Each material offers unique properties that can be tailored to meet the requirements of different battery systems.

In some implementations, the ZBSB apparatus **100** includes cathode current collector as HDPE sheet and anode current collector as one side of bilayer. Further, in some examples, the ZBSB apparatus **100** includes both cathode current collector and anode current collector made of titanium.

In some implementations, the ZBSB apparatus **100** includes the first cell **102A,** that includes the first cathode electrode **108A.** The ZBSB apparatus **100** is anode less, i.e., there is no first anode electrode present inside the ZBSB apparatus **100,** and the first anode current collector itself acts as an anode electrode for the ZBSB apparatus **100.** The first cathode electrode **108A** is in contact with the first cathode current collector **110A.** Further, the ZBSB apparatus **100** includes the second cell **102B,** that includes the second cathode electrode **108B.** Similarly, there is no second anode electrode present in the ZBSB apparatus **100.** The second cathode electrode **108B** is in contact with the second cathode current collector **110B.** The second anode current collector may itself act as the second anode electrode.

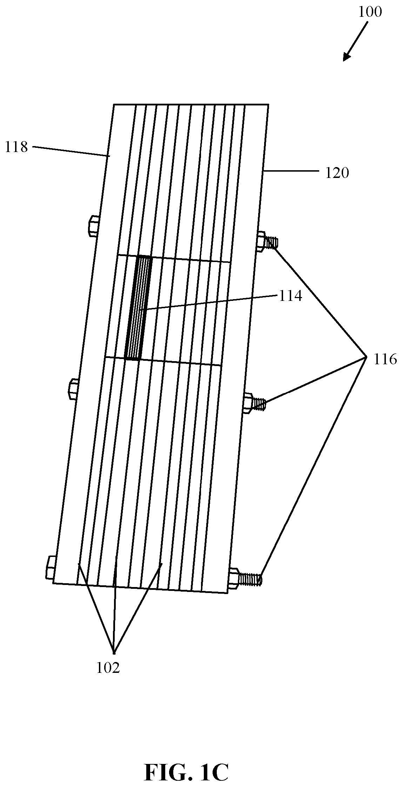

FIG. 1C is a diagram illustrating the top view of the ZBSB apparatus, in accordance with an embodiment of the present disclosure. FIG. 1C is explained in conjunction with elements from FIGs. 1A and 1B. With reference to FIG. 1C, there is shown a top view of the ZBSB apparatus 100 depicting the plurality of cells **102,** an electrolyte filling slot **114,** additionally a plurality of fixing means **116** (e.g., screw-bolt based fixing means), a first base plate **118** and a second base plate **120.**

The electrolyte filling slot **114** facilitates the introduction of the electrolyte into the ZBSB apparatus **100.** The electrolyte filling slot **114** allows the easy pouring of gel-based electrolytes into the ZBSB apparatus 100 via this designated slot, avoiding the mixing of electrolytes among different cells, thus avoiding short-circuiting or any other discrepancy which could arise out of mixing of electrolytes of different cells of the ZBSB apparatus **100.** Hence, the operational life of the ZBSB apparatus **100** is increased. In an implementation, during the assembly of the ZBSB apparatus **100,** the first base plate **118,** the plurality of cells **102,** and the second base plate **120** are compressed together. In some other implementations, the plurality of fixing means **116** are inserted through peripheral portions of each of the first base plate **118** and the second base plate **120.**

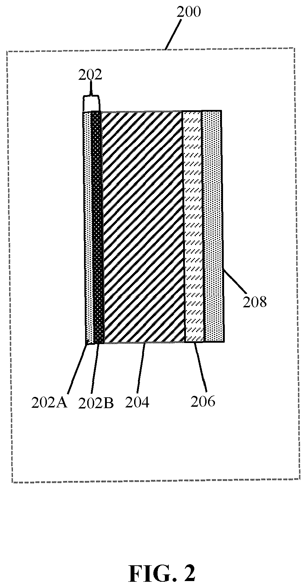

FIG. 2 is a diagram illustrating a cross-sectional view of a cell of another ZBSB apparatus, in accordance with another embodiment of the present disclosure. FIG. 2 is explained in conjunction with elements from FIGs. 1A, 1B and 1C. With reference to FIG. 2, there is shown a cell **200** that may be used in the ZBSB apparatus **100.** The cell **200** is substantially similar to each cell of the plurality cells **102** (of FIG. 1) in terms of functionality. The cell **200** includes a bilayer current collector **202** comprising an HDPE layer **202A** and a graphite layer **202B.** The graphite layer **202B** also acts as an anode electrode for the cell **200.** The cell **200** further includes a cathode electrode **206** and a separator **204** sandwiched between the graphite layer **202B** and the cathode electrode **206.** The cathode electrode **206** is substantially similar to each cathode electrode of the plurality of cells **102** (of FIG. 1). The cathode electrode **206** is in contact with a cathode current collector **208.** The cathode current collector **208** is made of an HDPE sheet.

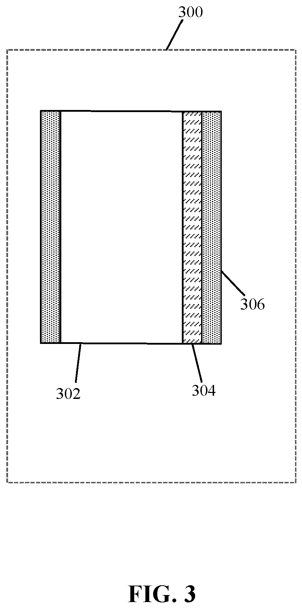

FIG. 3 is a diagram illustrating a cross-sectional view of a cell of a yet another ZBSB apparatus, in accordance with another embodiment of the present disclosure. FIG. 3 is explained in conjunction with elements from FIGs. 1A, 1B, and 1C. With reference to FIG. 3, there is shown a cell **300** that may be used in the ZBSB apparatus **100.** The cell **300** is substantially similar to each cell of the plurality of cells **102** (of FIG. 1) in terms of functionality. The cell **300** includes an anode current collector **302.** The anode current collector **302** acts as an anode electrode itself. The anode current collector **302** is made of a HDPE sheet. The cell **300** further comprises a cathode electrode **304.** The cathode electrode **304** is substantially similar to each cathode electrode of the plurality of cells **102** (of FIG. 1). The cathode electrode **304** is in contact with a cathode current collector **306.** The cathode current collector **306** is made of an HDPE sheet.

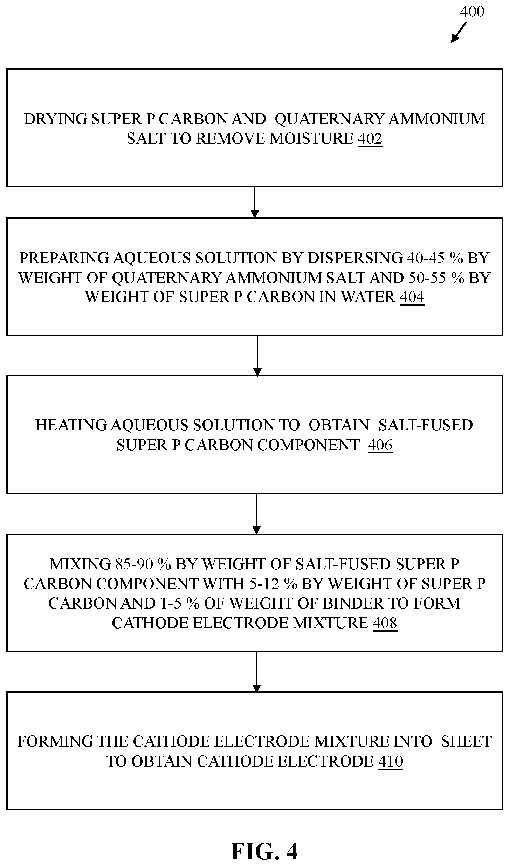

FIG. 4 is a flowchart of a method of preparation of the cathode electrode using a partially dry electrode process, in accordance with an embodiment of the present disclosure. FIG. 4 is described in conjunction with elements from FIGs. 1A to 3. With reference to FIG. 4, there is shown a method **400** for the preparation of the cathode electrode of the ZBSB apparatus **100** using a partially dry electrode process. In some implementations, the method 400 may also be implemented to prepare the cathode electrodes **206** and **304.** The method **400** includes steps **402** to **410.**

At step **402,** the method **400** includes drying the SPC and the quaternary ammonium salt to remove moisture. In an example, drying may be performed using oven drying or vacuum drying. In some examples, the quaternary ammonium salt may be spread out evenly on trays and placed in an oven set at a specific temperature, around 50 degrees Celsius. The heat from the oven facilitates evaporation of the moisture from the materials over a period of time, thus leaving them dry. In some examples, the SPC may be dried at 100 degrees Celsius for 24 hours. Beneficially, removal of moisture is essential to avoid any adverse reactions that moisture can cause during the cathode electrode preparation process and dry materials ensure better mixing and fusion of the components, leading to improved electrical and ionic conductivity in the final cathode electrode. Further, drying helps maintain the chemical stability of the materials, preventing degradation and ensuring the longevity of the cathode electrode of the ZBSB apparatus **100.**

At step **404,** the method **400** includes preparing an aqueous solution by dispersing 40-45 % by weight of the quaternary ammonium salt and 50-55 % by weight of the SPC in water. The desired quantities of the quaternary ammonium salt and the SPC based on the specified weight percentages are being weighed, and the measured amounts of the quaternary ammonium salt and the SPC are added to a container containing water. The water serves as the solvent for creating the aqueous solution. Further, the quaternary ammonium salt and the SPC are mixed. In some implementations, the preparing of the aqueous solution includes mixing the aqueous solution for 1-2 hours using magnetic stirring followed by 30 minutes of sonication. The magnetic stirring creates a vortex within the aqueous solution, promoting the mixing of the quaternary ammonium salt and the SPC particles. The vortex helps to ensure that all particles are evenly distributed throughout the solution, leading to uniform properties in the final product. Additionally, sonication further enhances mixing by subjecting the aqueous solution to high-frequency sound waves, which helps break up any agglomerates and promotes the dispersal of particles. Overall, this combination of mixing techniques improves the quality and consistency of the resulting salt-fused SPC component.

At step **406,** the method **400** includes heating the aqueous solution to obtain the salt-fused SPC component. Heating the aqueous solution to obtain the salt-fused SPC component facilitates solvent evaporation, increases concentration, promotes fusion between the quaternary ammonium salt and the SPC particles, enables the formation of the salt-fused SPC component in powder form, and enhances stability, contributing to the efficiency and effectiveness of the manufacturing of the cathode electrode. Further, the heating of the aqueous solution includes heating the aqueous solution at 100 degrees Celsius for 10 hours. The prolonged heating process allows for the thorough removal of water from the aqueous solution, leading to the formation of a dry powder with enhanced stability and purity. Additionally, heating at a specific temperature for an extended period ensures consistent and controlled conditions, which are crucial for achieving reproducible results in the synthesis process of the cathode electrode.

At step **408,** the method **400** includes mixing 85-90 % by weight of the salt-fused SPC component with 5-12 % by weight of the SPC and 1-5 % by weight of the binder to form a cathode electrode mixture. In an example, 90% by weight of salt-fused SPC is mixed with 7% of the SPC using the mix blender. Then, 3% of the PTFE is added as the binder, and the entire mixture is well-mixed using a mix binder. The salt-fused SPC component provides a high surface area and conductivity, while the SPC enhances the electrochemical performance. The binder and the PTFE facilitate in binding the components together and maintaining the structural integrity of the cathode electrode of the ZBSB apparatus **100.** By mixing the salt-fused SPC component with the SPC and the binder, the resulting cathode electrode mixture exhibits improved conductivity, surface area, and electrochemical performance. This leads to enhanced battery performance and efficiency in the ZBSB apparatus 100. Additionally, the use of the binder ensures the stability and durability of the cathode electrode of the ZBSB apparatus **100,** allowing it to withstand the operational conditions of the ZBSB apparatus **100.**

At step **410,** the method **400** includes forming the cathode electrode mixture into the sheet to obtain the cathode electrode. Transferring the cathode electrode mixture to a roll sheet-making press machine facilitates the production of a cathode electrode sheet with a predefined thickness. The process involves introducing the cathode electrode mixture into the roll sheet-making press machine, where it undergoes compression and rolling to form a uniform and compact sheet. By adjusting the settings of the roll sheet-making press machine, such as pressure and roller gap, the thickness of the resulting cathode electrode sheet can be controlled and optimized for its intended application in the cathode electrode of the ZBSB apparatus **100.** The process ensures consistency and uniformity in the manufacturing process, leading to reliable and high-performance cathode electrodes.

The steps **402** to **410** are only illustrative, and other alternatives can also be provided where one or more steps are added, one or more steps are removed, or one or more steps are provided in a different sequence without departing from the scope of the claims herein.

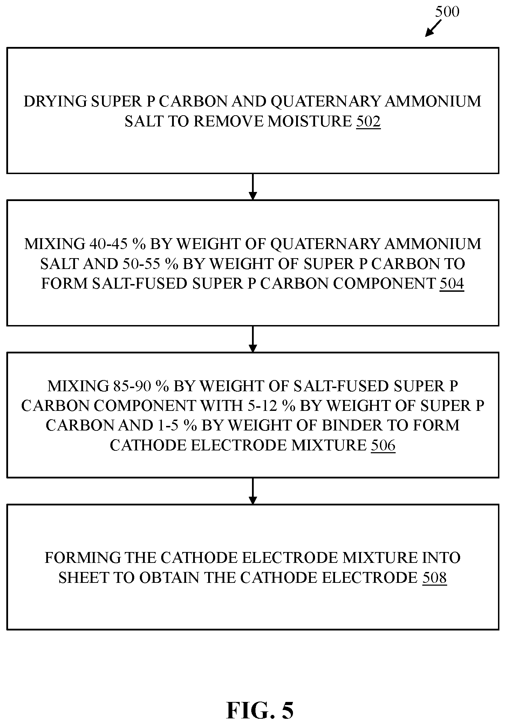

FIG. 5 is a flowchart of a method of preparation of the cathode electrode using a completely dry electrode process, in accordance with an embodiment of the present disclosure. FIG. 5 is described in conjunction with elements from FIGs. 1A to 4. With reference to FIG. 5, there is shown a method **500** for the preparation of the cathode electrode of the ZBSB apparatus **100** using a completely dry electrode process. In some implementations, the method **500** may also be implemented to prepare the cathode electrodes **206** and **304.** The method **500** includes steps **502** to **508.**

At step **502,** the method **500** includes drying the SPC and the quaternary ammonium salt to remove moisture. In an example, drying may be performed using oven drying or vacuum drying. In some examples, the quaternary ammonium salt may be spread out evenly on trays and placed in an oven set at a specific temperature of around 50 degrees Celsius. The heat from the oven facilitates evaporation of the moisture from the materials over a period of time, thus leaving them dry. In some examples, the SPC may be dried at 100 degrees Celsius for 24 hours. Beneficially, removal of moisture is essential to avoid any adverse reactions that moisture can cause during the cathode electrode preparation process and dry materials ensure better mixing and fusion of the components, leading to improved electrical and ionic conductivity in the final cathode electrode. Further, drying helps maintain the chemical stability of the materials, preventing degradation and ensuring the longevity of the cathode electrode of the ZBSB apparatus **100.**

At step **504,** the method **500** includes mixing 40-45 % by weight of the quaternary ammonium salt and 50-55 % by weight of the SPC to form a salt-fused SPC component. A mixture of the quaternary ammonium salt and the SPC is devoid of any liquid solvent. In an example, dry powder of quaternary ammonium salt and Super P carbon are weighed using a precision balance. The weighed quaternary ammonium salt and the SPC are transferred into a dry, clean mixing jar. In some examples, a mechanical mixer or a ball mill may be used for the mixing process. The ball mill is particularly effective for achieving a uniform blend because it provides both impact and attrition forces. The mixing jar or ball mill is operated for 1-7 minutes. The exact time may be adjusted based on the efficiency of the equipment and the predefined uniformity of the mixture. The mixing process is conducted in a dry environment to prevent any reabsorption of moisture, which is essential for the completely dry electrode process. The uniformity of the blend is checked by periodically stopping the mixing process. In some examples, visual inspection may be performed on a small sample to ensure that the quaternary ammonium salt and the SPC are evenly distributed. Once the mixing is complete, a homogenous mixture of quaternary ammonium salt and the SPC is obtained. By carefully controlling the mixing process and ensuring a dry, contamination-free environment, a consistent and effective salt-fused SPC component which is essential for the optimal performance of the ZBSB apparatus **100.**

At step **506,** the method **500** includes mixing 85-90 % by weight of the salt-fused SPC component with 5-12 % by weight of the SPC and 1-5 % by weight of the binder to form a cathode electrode mixture. In an example, the salt-fused SPC component and the SPC are taken into a mechanical mixer or ball mill. The mechanical mixer or ball mill may be used to blend the salt-fused SPC component and the SPC for several minutes until a uniform mixture is obtained. Further, the binder is added gradually to the uniform mixture of the salt-fused SPC component, and the SPC and mixing are continued until the binder is evenly distributed throughout the uniform mixture. In an example, mixing is performed for a sufficient duration i.e., 5-10 minutes, to ensure that all components are thoroughly blended. The mixture is checked periodically for uniformity. The resulting cathode mixture should be a homogeneous blend of the salt-fused SPC component, the SPC, and the binder.

The additional SPC increases the overall conductivity of the cathode electrode, ensuring efficient electron transport and reducing internal resistance. The binder provides structural integrity to the cathode electrode, ensuring that it maintains its shape and mechanical properties during the operation of the ZBSB apparatus **100.** The thorough mixing process ensures that the salt-fused SPC component, the SPC, and the binder are uniformly distributed. The homogeneity is essential for consistent electrochemical performance across the entire cathode electrode. The precise ratio of components (i.e., 85-90% salt-fused SPC component, 5-12% Super P carbon, and 1-5% binder) is designed to balance conductivity, structural integrity, and active material content. The optimization leads to improved charge/discharge cycles and the overall efficiency of ZBSB apparatus **100.**

At step **508,** the method **500** further includes forming the cathode electrode mixture into a sheet to obtain the cathode electrode. Transferring the cathode electrode mixture to the roll sheet-making press machine facilitates the production of the cathode electrode sheet with the predefined thickness. The process involves introducing the cathode electrode mixture into the roll sheet-making press machine, where it undergoes compression and rolling to form a uniform and compact sheet. By adjusting the settings of the roll sheet-making press machine, such as pressure and roller gap, the thickness of the resulting cathode electrode can be controlled and optimized for its intended application in the cathode electrode of the ZBSB apparatus **100.**

The steps **502** to **508** are only illustrative, and other alternatives can also be provided where one or more steps are added, one or more steps are removed, or one or more steps are provided in a different sequence without departing from the scope of the claims herein.

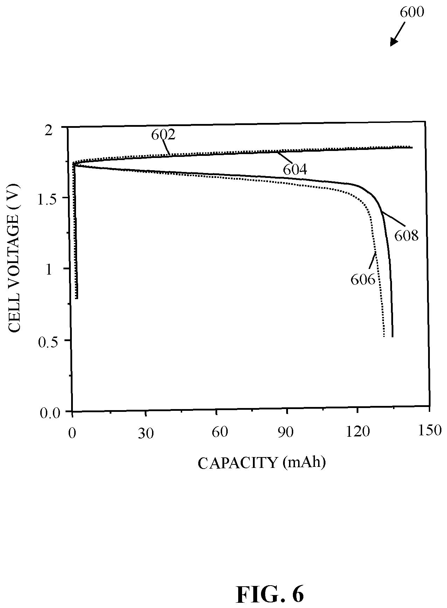

FIG. 6 is a diagram illustrating a graphical representation of a GCD profile depicting the comparison between a partially dry electrode process and a completely dry electrode process, in accordance with an embodiment of the present disclosure. With reference to FIG. 6, there is shown a graphical representation **600** depicting the comparison between the partially dry electrode process and the completely dry electrode process. The capacity of the ZBSB apparatus **100** is expressed in milliampere-hours (mAh) in an abscissa axis. The cell voltage is expressed in voltage (V) in an ordinate axis.

The graphical representation **600** includes a first curve **602,** a second curve **604,** a third curve **606,** and a fourth curve **608.** The first curve **602** depicts a charging profile of the second cell **102B,** having the cathode electrode prepared using the completely dry electrode process. The second curve **604** depicts a charging profile of the second cell **102B** with the cathode electrode prepared using the partially dry electrode process. Further, the third curve **606** depicts a discharging profile of the second cell **102B** having the cathode electrode prepared using the completely dry electrode process, and the fourth curve **608** depicts a discharging profile of the second cell **102B** having the cathode electrode prepared using the partially dry electrode process.

Table 1 (shown below) illustrates the influence of the cathode electrode manufacturing methods, specifically the completely dry electrode and partially dry electrode processes, on the parameters of the ZBSB apparatus 100. The comparison serves to highlight the significant impact of varying electrode fabrication techniques on the overall performance of the ZBSB apparatus **100.**

**Table 1**

| Process of the cathode electrode | Charge Capacity (mAh) | Discharge Capacity (mAh) | Coulombic Efficiency (%) | Voltaic Efficiency (%) | Energy Efficiency (%) |
|---|---|---|---|---|---|
| Partially dry Process | 144 | 134.87 | 93.66 | 90.87 | 85.14 |
| Complete dry process | 144 | 131.91 | 91.60 | 92.30 | 81.74 |

As outlined in Table 1, the partially dry electrode process employed in the preparation of the cathode electrode demonstrates better efficiency compared to the completely dry electrode process.

The partially dry electrode process refers to a method of preparing electrode materials where a combination of dry and wet processing techniques is employed. The partially dry electrode process includes steps where components are mixed and processed in both dry and partially wet states, resulting in a homogeneous and effective electrode composition.

The completely dry electrode process refers to a method of electrode preparation where the electrode materials are combined and processed without the use of a liquid solvent. Instead of using a solvent to create a slurry, the dry electrode process involves mixing the electrode components in a dry state. The mixing includes blending active materials, conductive additives, binders, and other additives directly in their dry form. The resulting mixture is then processed and compressed to form electrode sheets or structures.

### EXPERIMENTAL PART:

Preparation of the cathode electrode using a partially dry electrode process includes three main steps:
1. Preparation of the quaternary ammonium salt fused with the SPC. The preparation of the quaternary ammonium salt fused with SPC involves following steps. First, the SPC is dried at 100 degrees Celsius for 24 hours to eliminate moisture. Simultaneously, the quaternary ammonium salt is also dried to remove moisture, maintaining a temperature of 50 degrees Celsius for 24 hours. Secondly, the aqueous solution is created using pure water as the solvent. Initially, the quaternary ammonium salt is added, ensuring complete dispersion. Following of this the SPC is introduced to the mixture of water and the quaternary ammonium salt. The entire combination of the water, the quaternary ammonium salt and the SPC is thoroughly dispersed using magnetic stirring for 1 hour, followed by 30 minutes of sonication. The resulting homogenous solution is transferred to a clear glass vessel. Subsequently, the homogeneous solution is placed in a hot air oven set at 100 degrees Celsius for 10 hours. This process yields the final product the salt-fused SPC component.
2. Partially Dry electrode process: Initially, 90% wt. of salt-fused SPC component was taken, followed by 7% of the SPC. This mixture was thoroughly blended using a mix blender. Subsequently, 3% of the PTFE was added as a binder, and the entire mixture was well-mixed using a mix binder. The final product obtained is the cathode electrode mixture.
3. Preparation of the cathode electrode sheet: The cathode electrode mixture was transferred to the roll sheet-making press machine to obtain the cathode electrode sheet of the proper thickness.

Preparation of the cathode electrode using a completely dry electrode process includes three main steps:
1. Preparation of the quaternary ammonium salt fused with the SPC: The preparation of the quaternary ammonium salt fused with SPC involves several steps. Firstly, the SPC is dried at 100 degrees Celsius for 24 hours to eliminate moisture. Simultaneously, the quaternary ammonium salt is also dried to remove moisture, maintaining a temperature of 50 degrees Celsius for 24 hours. Secondly, the quaternary ammonium salt and the SPC were blended in a mixing jar for 1-7 minutes. Finally, the salt-fused SPC component was obtained.
2. Completely Dry electrode process: Initially, 90% wt. of salt-fused SPC component was taken, followed by 7% of the SPC. This mixture was thoroughly blended using a mix blender. Subsequently, 3% of the PTFE was added as a binder, and the entire mixture was well-mixed using a mix binder. The final product obtained is the cathode electrode mixture.
3. The cathode electrode mixture was transferred to the roll sheet-making press machine to obtain the cathode electrode sheet of the proper thickness.

**Table 2: Analyses of the cathode electrode with various compositions**

| Sample | Salt-fused SPC component (wt%) | Super P Carbon (wt%) | Binder (wt%) | Discharge Capacity (mAh) | Energy Efficiency (%) | Internal Resistance (mΩ) |
|---|---|---|---|---|---|---|
| 2A | 80 | 15 | 5 | 98.7 | 76.8 | 28.4 |
| 2B | 83 | 12 | 5 | 112.3 | 79.2 | 24.1 |
| 2C | 85 | 12 | 3 | 126.8 | 82.7 | 21.6 |
| 2D | 87 | 10 | 3 | 132.1 | 84.1 | 19.8 |
| 2E | 88 | 8 | 4 | 133.9 | 85.1 | 18.3 |
| 2F | 90 | 7 | 3 | 136.7 | 86.6 | 17.9 |
| 2G | 92 | 5 | 3 | 128.4 | 82.3 | 20.7 |
| 2H | 95 | 3 | 2 | 119.2 | 78.9 | 23.5 |

Based on the comprehensive analysis of cathode current collector performance with various compositions, trends emerge that establish the optimal formulation of the cathode electrode. The experimental data in Table 2 depicts a clear performance peak within the 85-90% salt-fused SPC component, with sample "2F" demonstrating the highest discharge capacity of 136.7 milli ampere hour (mAh) and energy efficiency of 86.6%. The data consistently shows that increasing content of salt-fused SPC component from 80% to 90% correlates with progressive improvements across all performance metrics, with discharge capacity rising from 98.7 mAh to 136.9 mAh and internal resistance decreasing from 28.4 mΩ to 17.9 mΩ.

However, the analysis reveals diminishing returns and performance degradation when salt-fused SPC component exceeds 90%. Composition 2G shows a slight decline to 136.7 mAh capacity despite maintaining good energy efficiency at 82.3%. More significantly, sample 2H with 95% salt-fused SPC component respectively, demonstrate substantial performance deterioration, with 2H showing only 119.2 mAh capacity and 78.9% efficiency. The decline is accompanied by increased internal resistance, rising from 18.9 mΩ in sample 2F to 23.5 mΩ in sample 2H, indicating compromised electrochemical kinetics at excessive concentration of salt-fused SPC component.

The Super P Carbon optimization reveals an inverse relationship with the salt-fused SPC component, where the optimal balance occurs at 7% Super P Carbon in the sample 2F. When the SPC s reduced below 7% threshold leads to progressively degraded performance, while when SPC is increased above 10% also results in suboptimal outcomes. The experimental results indicates that SPC serves important role in maintaining conductive pathways and structural integrity but must be carefully balanced to avoid diluting the active salt-fused SPC component.

The binder content analysis demonstrates that while higher binder percentages improve mechanical integrity, they negatively impact electrochemical performance due to reduced active material content. Sample 2A with 5% binder shows poor performance across all metrics, while the optimal range appears to be 3-4% as demonstrated by samples 2C through 2F. Internal resistance measurements provide insights into the electrochemical kinetics, the sample 2F achieves the lowest resistance of 17.9 mΩ. The superior conductivity directly correlates with enhanced charge transfer efficiency and reduced energy losses during operation. The resistance trend closely follows the capacity performance, confirming that the salt-fused SPC component significantly improves the electronic and ionic conductivity of the cathode electrode.

**Table 3**

| Sample | Salt-fused super P carbon component (wt %) | Super P carbon (wt %) | Binder (wt %) |
|---|---|---|---|
| 3A | 80 | 15 | 5 |
| 3B | 85 | 12 | 3 |
| 3C | 88 | 8 | 4 |
| 3D | 90 | 70 | 3 |
| 3E | 95 | 3 | 2 |

Table 3 depicts various compositions of the three components present in the cathode electrode and an experiment is performed on the samples present in Table 3. Analysis of the various parameters has been explained in the table 4 and table 5 below.

**Table 4: Comparative Analysis Of Initial And Final Capacity Across Various Samples**

| Sample | Initial Capacity (mAh) | Capacity at 200 cycles (mAh) | Capacity Retention (%) | Fade Rate (%/cycle) | Efficiency Trend |
|---|---|---|---|---|---|
| 3A | 98.7 | 64.2 | 65.1 | 0.175 | Declining |
| 3B | 126.8 | 98.4 | 77.6 | 0.112 | Stable |
| 3C | 134.9 | 108.7 | 80.6 | 0.097 | Improving |
| 3D | 133.7 | 105.2 | 78.7 | 0.106 | Stable |
| 3E | 119.2 | 71.8 | 60.2 | 0.199 | Declining |

Table 4 presents cycle life data that demonstrates the long-term durability and performance stability of various compositions of the cathode electrode over 200 charge-discharge cycles. The analysis reveals variations in capacity retention, fade rates, and efficiency trends that directly impact the operation the of zinc-bromine static battery. The initial capacity data establishes a clear performance hierarchy among the tested compositions, with Sample 3C achieving the highest initial capacity of 134.9 mAh, followed closely by Sample 3D at 133.7 mAh. This represents a substantial 36.7% and 35.4% improvement respectively over the Sample 3A (i.e., 98.7 mAh). Sample 3B demonstrates moderate enhancement at 126.8 mAh, while Sample 3E shows declining performance at 119.2 mAh. The initial capacity variations directly correlate with the electrode composition optimization and confirms that concentration of the salt-fused SPC component concentration significantly influences the charge storage capability of the cathode electrode. The data in table 4 reveals that sample 3C and sample 3D represent the optimal formulation range and delivers superior initial performance that forms the foundation for long-term battery operation.

The 200-cycle performance data provide analysis of the long-term stability and commercial viability of each sample. Sample 3B demonstrates good stability with 77.6% retention, while sample 3D shows good retention at 78.7%. The sample 3A exhibits poor long-term performance with only 65.1% retention that signifies the significant durability improvements achieved through the salt-fused SPC. Sample 3E shows the worst retention at 60.2%, indicating that excessive deviation from the optimal composition range leads to accelerated degradation. The absolute capacity values after 200 cycles reveal the practical impact of these retention differences.

The fade rate data depicted in Table 4 provides quantitative insight into the degradation kinetics of each sample. For example, the sample 3C and the sample 3D shows the lowest fade rates. The superior stability of sample D and the sample E indicates that the optimal salt-fused SPC composition effectively mitigates the electrochemical and mechanical degradation mechanisms that may limit life of the zinc-bromine static battery. The sample 3B shows good fade rate control at 0.112%/cycle, while sample 3D exhibits slightly higher degradation at 0.106%/cycle.

The efficiency trend classification indicates performance of the various samples over extended cycling. Sample 3B and sample 3D show efficiency having stable trends. The stable trend indicates consistent performance without significant degradation or improvement. The stability is highly desirable for the zinc bromine static battery that require predictable performance characteristics. In contrast, samples 3A and 3E exhibit "declining" trends that suggests progressive deterioration in electrochemical efficiency that may compromise performance of the zinc bromine static battery.

The efficiency trend analysis shown in Table 4 indicates that the cathode electrode that are properly formulated not only maintain but potentially improve their performance over time, while suboptimal compositions suffer from continuous degradation. The experimental data of Table 4 validates that the salt-fused SPC component in range of 85-90% (for example, sample 3B, sample 3C, and sample 3D) provides superior long-term performance compared to samples outside the range.

**Table 5: Analysis Of Various Compositions Of Cathode Electrode Across Multiple Cycles And Their Corresponding Performance:**

| Sample | Initial Capacity (mAh) | 100 Cycles Retention (%) | 200 Cycles Retention (%) | 300 Cycles Retention (%) | 500 Cycles Retention (%) | Fade Rate (%/cycle) |
|---|---|---|---|---|---|---|
| 3A | 89.4 | 83.7% | 71.8% | 59.4% | 37.8% | 0.124 |
| 3B | 126.8 | 89.3% | 80.5% | 71.9% | 55.3% | 0.089 |
| 3C | 132.1 | 90.1% | 82.1% | 74.0% | 58.4% | 0.083 |
| 3D | 138.9 | 91.7% | 85.3% | 78.2% | 65.8% | 0.068 |
| 3E | 133.7 | 90.2% | 81.9% | 73.7% | 58.2% | 0.084 |

The electrochemical capacity measurements depicted in Table 5 indicates a systematic relationship between composition of the cathode electrode and capability of charge storage. The sample 3A exhibits a baseline capacity of 89.4 mAh and represents the performance characteristics of conventional carbon-based cathode electrodes. A progressive enhancement in capacity is observed across the samples with modified compositions. For example, sample 3B achieves 126.8 mAh, sample 3C has 132.1 mAh, and sample 3E attains 133.7 mAh. Sample 3D demonstrates the highest electrochemical capacity at 138.9 mAh and an enhancement of over 55.4% of the conventional carbon-based cathode electrodes.

The progressive increase of the capacity may be correlated directly with the concentration of the salt-fused SPC component and internal composition optimization. The enhanced charge storage results from improved ionic conductivity pathways created by the quaternary ammonium salt integration and electronic conduction networks provided by the SPC matrix. The capacity plateau observed between samples 3C, 3D, and 3E indicates theoretical maximum utilization of the active electrode material within the given compositional framework.

The 100-cycle retention data of Table 5 indicate fundamental differences in electrochemical stability during the initial operation period. Sample 3D maintains 91.7% retention that signifies superior electrochemical interface stability compared to the 83.7% retention observed in the sample 3A. The 8.0 % difference indicates significantly reduced capacity loss mechanisms during the initial cycling phase and signifies enhanced electrode-electrolyte interface stability and reduced structural degradation of the cathode electrode. At 200 cycles, sample 3D maintains exceptional 85.3% retention, compared to 71.8% for the sample 3A. The substantial difference translates to absolute capacities of 118.4 mAh for sample 3D versus 64.2 mAh for sample 3A. At 300-cycles the data reveals continued superior performance of sample 3D with 78.2% retention versus 59.4% for the sample A. The expanding performance gap indicates that the benefits of the composition of the cathode electrode compound over extended cycling periods due to enhanced structural stability and reduced degradation mechanisms.

Further, the 500-cycle endpoint provides definitive indicator of long-term electrochemical stability. Sample 3D achieves 65.8% retention compared to 37.8% for the sample A 170% higher remaining capacity. This exceptional retention demonstrates the fundamental electrochemical advantages achieved through salt-fused SPC optimization. The fade rate quantification provides details into the fundamental degradation mechanisms affecting long-term performance of the cathode electrode. Sample 3D exhibits the lowest fade rate of 0.068%/cycle and indicates a 45.2% reduction compared to the sample A. The better stability indicates effective mitigation of multiple degradation pathways including bromine crossover, electrode swelling, active material dissolution, and electrochemical interface degradation. The fade rate progression across compositions demonstrates systematic improvement through compositional optimization. The 45% variation in fade rates between the sample A and sample D indicates the role of salt-fused SPC component in enhancing stability of the cathode electrode.

The electrochemical performance data obtained during experiment also indicates clear structure-property relationships governing behaviour of the cathode electrode. The concentration of the salt-fused SPC component exhibits a preferred range where ionic conductivity, electronic conductivity, and structural stability achieves balanced optimization. Below the preferred range insufficient quaternary ammonium salt content limits ionic transport and bromine management. Within the preferred range (e.g., samples 3C, 3D, 3E), fine-tuning of component ratios enables performance optimization while maintaining stability. Sample 3D represents the preferably better performance where the internal composition ratio of TBAB to SPC achieves optimal balance for electrochemical functionality. The slight performance decline observed in samples beyond the preferred range suggests that excessive quaternary ammonium salt content may compromise electronic conductivity.

The retention data correlates with electrochemical impedance measurements showing that sample 3D maintains the lowest charge transfer resistance throughout cycling. The enhanced charge transfer kinetics result from optimized electrode microstructure that provides efficient pathways for both ionic and electronic transport. The reduced impedance growth rate over cycling indicates stable interface properties and minimal formation of resistive surface layers. Mass transport analysis indicates that the optimized composition maintains effective electrolyte accessibility to electrode surfaces throughout cycling, preventing the mass transport limitations that typically develop in conventional electrode structures due to pore blockage and surface passivation. Extrapolation of the degradation kinetics using the measured fade rates provides quantitative predictions for extended operational periods. Sample 3D would retain approximately 40% capacity after 1000 cycles compared to 13% for the control sample, representing a threefold improvement in projected longevity. The linear fade behaviour observed throughout the 500 cycles suggests that these projections remain valid for extended operation periods.

The electrochemical stability data shown in Table 5 indicates that that the optimized composition of the cathode addresses the fundamental limitations of zinc-bromine static battery through enhanced bromine management, improved structural stability, and optimized transport properties. The improvements result in substantially extended lifetime of the zinc bromine static battery and maintained performance characteristics that enable practical implementation of zinc-bromine static battery for long-duration energy storage applications.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

## Claims

1. A cathode electrode for a Zinc Bromine Static Battery (ZBSB) apparatus (100), comprising:
85-90 % by weight of a mixture of a quaternary ammonium salt fused with super P carbon to form a salt-fused super P carbon component;
5-12 % by weight of the super P carbon; and
1-5 % by weight of a binder,
wherein the salt-fused super P carbon component, the super P carbon, and the binder are mixed together to form the cathode electrode.

2. The cathode electrode of claim 1, wherein the salt-fused super P carbon component comprises 50-55 % by weight of the quaternary ammonium salt and 40-45 % by weight of the super P carbon.

3. The cathode electrode of claim 1, wherein the quaternary ammonium salt is tetra butyl ammonium bromide (TBAB).

4. The cathode electrode of claim 1, wherein the binder comprises polytetrafluoroethylene (PTFE) or polyvinylidene fluoride (PVDF).

5. A Zinc Bromine Static Battery (ZBSB) apparatus (100), comprising:
a first cell (102A) that comprises a first cathode electrode (108A),
wherein the first cathode electrode(108A) is in contact with a first cathode current collector (110A) and
a second cell (I02B) that comprises a second cathode electrode (108B),
wherein the second cathode electrode (108B) is in contact with a second cathode current collector (110B);
wherein each of the first cathode electrode (108A) and the second cathode electrode (108B) comprises:
85-90 % by weight of a mixture of a quaternary ammonium salt fused with super P carbon to form a salt-fused super P carbon component;
5-12 % by weight of super P carbon; and
1-5 % by weight of a binder,
wherein the salt-fused super P carbon component, the super P carbon, and the binder are mixed together to form the cathode electrode.

6. The ZBSB apparatus (100) of claim 5, wherein each of the first cathode and the second cathode electrode is in physical contact with a current collector comprising any one of titanium metal, a conductive high-density polyethylene (HDPE) sheet, and a bilayer of graphite conducting polymer and HDPE conducting sheet.

7. A method (400) of preparing a cathode electrode for a Zinc Bromine Static Battery apparatus (100), comprising:
drying super P carbon and a quaternary ammonium salt to remove moisture;
preparing an aqueous solution by dispersing 40-45 % by weight of the quaternary ammonium salt and 50-55 % by weight of the super P carbon in water;
heating the aqueous solution to obtain a salt-fused super P carbon component;
mixing 85-90 % by weight of the salt-fused super P carbon component with 5-12 % by weight of the super P carbon and 1-5 % by weight of a binder to form a cathode electrode mixture; and
forming the cathode electrode mixture into a sheet to obtain the cathode electrode.

8. The method (400) of claim 7, wherein the preparing of the aqueous solution comprises mixing the aqueous solution for 1-2 hours using magnetic stirring followed by 30 minutes of sonication.

9. The method (400) of claim 7, wherein the heating of the aqueous solution comprises heating the aqueous solution at 100 degrees Celsius for 10 hours.

10. A method (400) of preparing a cathode electrode for a Zinc Bromine Static Battery apparatus (100), comprising:
drying super P carbon and a quaternary ammonium salt to remove moisture;
mixing 40-45 % by weight of the quaternary ammonium salt and 50-55 % by weight of the super P carbon to form a salt-fused super P carbon component, wherein a mixture of the quaternary ammonium salt and super P carbon is devoid of any liquid solvent;
mixing 85-90 % by weight of the salt-fused super P carbon component with 5-12 % by weight of the super P carbon and 1-5 % by weight of a binder to form a cathode electrode mixture; and
forming the cathode electrode mixture into a sheet to obtain the cathode electrode.
